(19) Europäisches Patentamt
European Patent Office
Office européen des brevets

(11) **EP 3 001 214 A1**

(12) **EUROPEAN PATENT APPLICATION**

(43) Date of publication:
**30.03.2016 Bulletin 2016/13**

(51) Int Cl.:
***G01S 5/00*** *(2006.01)*  ***G01S 5/02*** *(2006.01)*

(21) Application number: **14306503.5**

(22) Date of filing: **26.09.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Fleureau, Julien**
**35576 Cesson-Sévigné (FR)**

• **Mollet, Nicolas**
**35576 Cesson-Sévigné (FR)**
• **Guillotel, Philippe**
**35576 Cesson-Sévigné (FR)**
• **Tariolle, François-Louis**
**35576 Cesson-Sévigné (FR)**

(74) Representative: **Huchet, Anne**
**Technicolor**
**1-5 rue Jeanne d'Arc**
**92130 Issy-Les-Moulineaux (FR)**

(54) **Method and apparatus for object localization**

(57)     A method optimizes (ST41) positions of anchors in a reference frame of a network by minimizing a variance of an error of estimation of the positions of the anchors.

# FIG.4

**Description**

FIELD

The present disclosure generally relates to a method and an apparatus for object localization.

BACKGROUND

Wireless object localization may utilize GPS (Global Positioning System) to track an object outdoors. However, according to GPS-based object localization techniques, it is difficult to track the object when the object to be tracked is located indoors or located within an environment in which communication with a GPS satellite is difficult, such as inside of a building or the like in a surrounding interfere with the communication. Hence, in situations where the GPS-based object localization techniques become inefficient or ineffective, alternative object localization techniques need to be considered. Two categories of alternative object localization techniques are known.

A first category of the alternative object localization techniques relies on video-based or video-processing solutions. Approaches making use of a unique camera may perform the object localization by exploiting redundancy of information between successive images picked up by the same 2D (Two-Dimensional) or 3D (Three-Dimensional) camera, as in the case of SLAM (Simultaneous Localization And Mapping), for example, and/or by the tracking feature points. A probalistic model of a scene as well as the object in the scene tracked by the object localization of the camera can be updated along the process. Some basic geometry information related to the scene may also be integrated into an algorithm of the model. However, such approaches are computationally expansive, are more adapted to slow motions, and are dependent on the camera precision, such as camera resolution, as well as on the environment in which the object localization is performed.

Other video-based or video-processing solutions take advantage of a multiple RGB (Red, Green, Blue) or infra-red camera, as well as some trackers to infer the position of the object that is tracked. For example, the trackers may be infra-red markers on the object to be tracked, or SIFT (Scale-Invariant Feature Transform) points computed on the images picked up by the camera, for example. A model of the camera, representing a relationship between the 3D object position and its position in the 2D images, as well as complex calibrations requiring human interaction, are required to perform the object localization. Moreover, although some of these video-based or video-processing solutions may exhibit interesting performances outdoors, such solutions may remain expansive and may not always be robust depending on illumination conditions, for example.

On the other hand, a second category of the alternative object localization techniques relies on wave-based solutions, including GPS, radio, laser, infra-red, ultra-sound, or the like. Approaches making use of the waves may perform the object localization using a network of distance sensors which are able to compute their distance to the object to be tracked, in line of sight, or even with obstacles interposed between the distance sensor and the object to be tracked, using Ultra Wide Band-based technologies, for example. When the network is calibrated such that the positions of all distance sensors are known relative to a given reference frame, schemes based on one or a plurality of triangulations may enable the position of the object to be tracked relative to the reference frame with a certain accuracy. In this case, each distance sensor needs to be able to communicate its distance measurement to a server which performs a 3D position estimation.

To evaluate the distance to the tracked object, the distance sensors generally make use of the measurement of a ToF (Time-of-Flight) of an electromagnetic wave emitted towards the object to be tracked. Two sub-strategies may be considered, where a first sub-strategy measures the ToF of the wave after its reflection on the object to be tracked using ultra-sound or laser technologies, for example, while a second sub-strategy directly measures the ToF between the distance sensor and the object to be tracked. In this case, the object needs to be equipped with a dedicated device, synchronized with an emitter, as in solutions provided by semiconductor chips for object localization manufactured by BeSpoon SAS or Decawave Ltd. for example.

Estimating the distance between two distance sensors may be quite straightforward on the basis of the latter technologies described above, however, estimating the 3D position of the object to be tracked from the network of distance sensors may be not as easy, especially when the estimated distance between two distance sensors includes noise.

Studies have been made on auto-calibration of sensor nodes for 2D tracking, and mainly for indoors, due to applicative context and GPS availability. Trilaterations are the main tools for auto-calibration sometimes known as SLAT (Simultaneous Localization and Tracking), as explained in Jorge Guevara et al., "Auto-localization algorithm for local positioning systems", Ad Hoc Networks, Vol. 10, pp. 1090-1100, 2012.

Computations for the auto-calibration may be performed with additional requirements of a moving node inside the network, as proposed in Rainer Mautz et al., "A Robust Indoor Positioning and Auto-Localisation Algorithm", Journal of Global Positioning Systems, Vol. 6, No. 1, pp.38-46, 2012. Some assumptions on this motion or on the geometry of the set of moving nodes are then used in a Kalman filter-based or extended Kalman filter-based strategy to infer anchor positions. However, no strategy has been proposed to optimize the positioning of the anchors in 3D space for an optimal tracking set-up, as may be seen from C. Priyadharsini et al., "Survey on Auto-Calibration of Beacon Nodes in Indoor Location Computing", International Journal of Emerging Technology and Advanced Engineering, Vol. 2, Issue 11, pp. 170-175, 2012 (for a review).

In the second category of the alternative object localization techniques, the number of anchors needs to be three (3) or greater, and preferably four (4) or greater in order to increase the accuracy of the object localization. However, if the 3D position of the object to be tracked were estimated based on distances from four (4) or more anchors using a system of linear equations (or linear system), the system of linear equations would become over-determined and no solution could be obtained. Consequently, it is difficult to increase the accuracy of the object localization.

SUMMARY

According to an aspect of the present disclosure, a method for optimizing positions of anchors in a reference frame of a network, wherein the network includes distance sensors forming the anchors that are fixed in respective positions and a distance sensor forming a tag associated with an object of which three-dimensional position in the reference frame of the network is estimated may include optimizing positions of the anchors in the network by minimizing a variance of an error of estimation of the positions of the anchors.

According to another aspect of the present disclosure, an apparatus for optimizing positions of anchors in a reference frame of a network, wherein the network includes distance sensors forming the anchors that are fixed in respective positions and a distance sensor forming a tag associated with an object of which three-dimensional position in the reference frame of the network is estimated may include a processor configured to optimize positions of the anchors in the network by minimizing a variance of an error of estimation of the positions of the anchors.

According to still another aspect of the present disclosure, a computer-readable storage medium having stored therein a program which, when executed by a computer, causes the computer to perform a process for optimizing positions of anchors in a reference frame of a network, wherein the network includes distance sensors forming the anchors that are fixed in respective positions and a distance sensor forming a tag associated with an object of which three-dimensional position in the reference frame of the network is estimated includes optimizing positions of the anchors in the network by minimizing a variance of an error of estimation of the positions of the anchors.

The object and advantages of the present disclosure will be realized and attained by means of the elements and combinations particularly pointed out in the claims.

It is to be understood that both the foregoing general description and the following detailed description are exemplary and explanatory and are not restrictive of the invention, as claimed.

BRIEF DESCRIPTION OF THE DRAWINGS

FIG. 1 is a diagram illustrating an example of a network of distance sensors in a first embodiment;

FIG. 2 is a block diagram illustrating an example of a distance sensor in the first embodiment;

FIG. 3 is a flow chart for explaining a process of the first embodiment;

FIG. 4 is a flow chart for explaining a process of a second embodiment; and

FIG. 5 is a flow chart for explaining a process of a third embodiment.

DESCRIPTION OF EMBODIMENTS

Embodiments of the present invention will be described with reference to the accompanying drawings.

A description will now be given of a method, an apparatus, and a computer-readable storage medium, in each embodiment according to the present invention.

In the second category of the alternative object localization techniques described above, one embodiment estimates a 3D position of an object to be tracked based on distances from four (4) or more anchors using a system of linear equations (or linear system). A network of distance sensors may be categorized into two kinds of distance sensors, namely, a distance sensor forming an anchor that is fixed in a position during operation thereof, and a distance sensor forming a tag attached to or embedded in the object to be tracked. The object to be tracked may be a mobile apparatus, such as a mobile phone, a tablet device, a drone, or the like. Hence, the tag is movable in position during operation thereof. Each distance sensor may have a known configuration capable of measuring or evaluating its distance from another distance sensor which may be the anchor or the tag with a certain degree of accuracy. As an example, the distance sensor may measure its distance from the other distance sensor by detecting an RSSI (Received Signal Strength Indicator) from signals received from the other distance sensor. Accordingly, each distance sensor may have a communicating function capable of communicating with other distance sensors, such that the distance sensors in the network are communicable with each other.

The object may be tracked using a strategy similar to that used by the auto-calibration described above to infer the anchor positions, such as the Kalman filter-based or extended Kalman filter-based strategy, and the Bayesian approaches, for example.

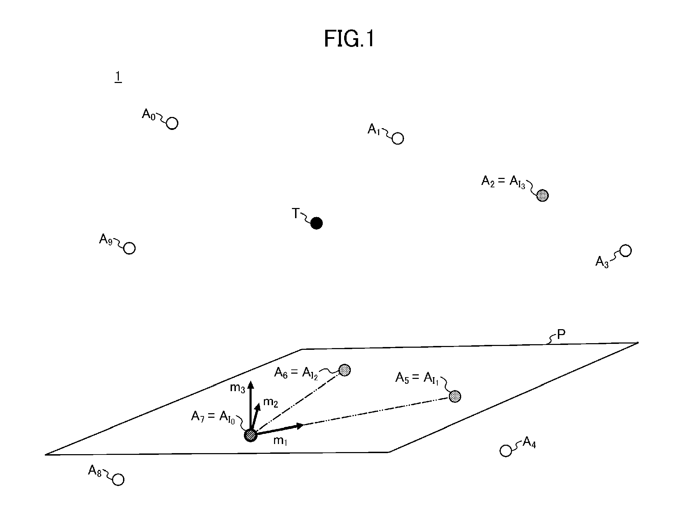

FIG. 1 is a diagram illustrating an example of a network 1 of distance sensors in a first embodiment. As an example, the network 1 illustrated in FIG. 1 includes ten (10) anchors $A_0$ through $A_9$, and a tag T. The anchors $A_0$ through $A_9$, and the tag T are indicated by circular symbols in FIG. 1. Of course, the number of anchors is not limited to ten (10), and N anchors may be provided in the network 1, where N is a natural number greater than or equal to four (4). Further, more than one (1) tag T may be movable within the network 1, however, it may be readily understood that processes described hereinafter with respect to one (1) tag T may be performed similarly for other tags movable within the network 1. For the sake of convenience, the circular symbol is hatched for the user-defined origin to be described below, the circular symbol is shaded for the user-defined reference to be described below, and the circular symbol is black for the target T.

In this embodiment, a framework can be provided to estimate the 3D position of the object to be tracked, inside the network of communicable distance sensors which are calibrated, and take advantage of all of the information of the network of distance sensors in order to robustify the estimation of the 3D position of the object to be tracked.

In this embodiment, a 3D object localization process to estimate the 3D position of the object to be tracked may use a calibrated network and a weighted least squares regression strategy.

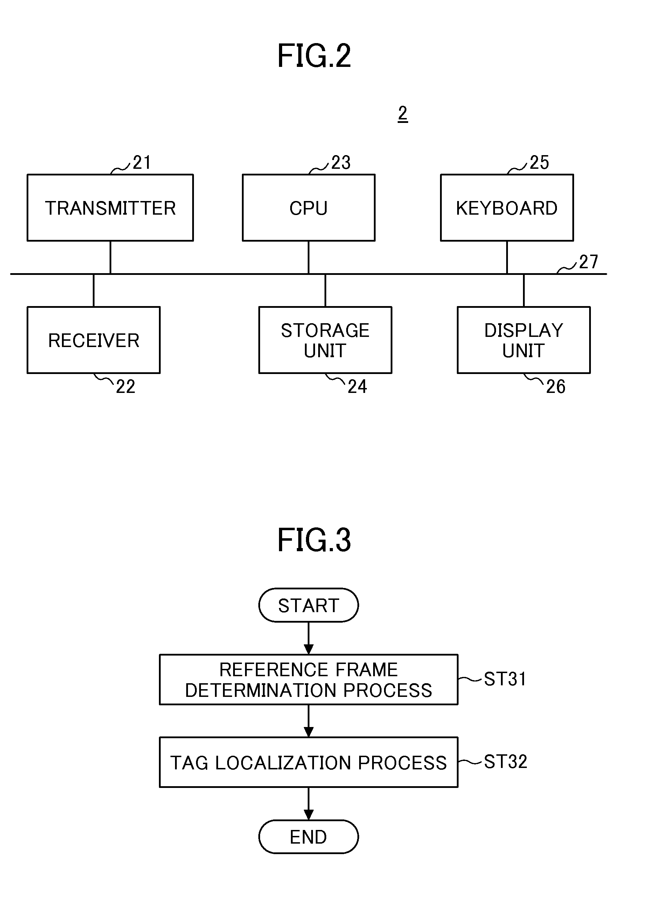

The distance sensors in the network 1 illustrated FIG. 1 are categorized into the anchors $A_0$ through $A_9$ and the tag T. However, the distance sensors forming the anchors $A_0$ through $A_9$ and the tag T may have the same configuration, that is, the configuration illustrated in FIG. 2, for example. FIG. 2 is a block diagram illustrating an example of the distance sensor in the first embodiment. As illustrated in FIG. 2, a distance sensor 2 includes a transmitter 21, a receiver 22, a CPU (Central Processing Unit) 23, and a storage unit 24 that are connected via a bus 27. The connection of the transmitter 21, the receiver 22, the CPU 23, and the storage unit 24 is not limited to the connection illustrated in FIG. 2 using the bus 27, and other connections may be employed.

The distance sensor 2 may further include a keyboard 25 and a display unit 26 that are connected to the bus 27. When the object to be tracked is the drone, for example, the keyboard 25 and the display unit 26 may be omitted. On the other hand, when the object to be tracked is the mobile phone or the tablet device, for example, the keyboard 25 and the display unit 26 may be provided. The keyboard 25 is an example of an input device from which instructions, data, or the like may be input to the CPU 23. The display unit 26 may display messages for an operator or a user of the distance sensor 2, and results of processes, such as a tag localization process, for example. Of course, the keyboard 25 and the display unit 26 may be integrated into a single unit such as a touchscreen panel, for example.

The transmitter 21 may have a known configuration including a function to transmit signals by wireless communication. The receiver 22 may have a known configuration including a function to receive signals by wireless communication. The transmitter 21 and the receiver 22 may use mutually different antennas (not illustrated), or use a single common antenna (not illustrated). The CPU 23 is an example of a processor or computer that controls operations of the distance sensor 2. The storage unit 24 may store programs to be executed by the CPU 23, intermediate data of computations and processes performed by the CPU 23, parameters used by the computations and processes performed by the CPU 23, and results of the computations and processes performed by the CPU 23, including a distance of the distance sensor 2 from another distance sensor 2 within the network 1. The storage unit 24 may be formed by any suitable device capable of electronically storing signals (or data), such as a semiconductor memory device, and a drive unit installed with a recording medium. The storage unit 24 may form an example of a non-transitory computer-readable storage medium which stores the program to be executed by the CPU 23. In an example, the computer program is downloadable from a communication network such as an internet.

Of course, a configuration of the distance sensors 2 forming the anchors $A_0$ through $A_9$, and a configuration of the distance sensor 2 forming the tag T may be mutually different, as long as each distance sensor 2 is communicable with other distance sensors 2 and is able to estimate its distance from another distance sensor 2 with a certain degree of accuracy.

Next, a description will be given of the 3D object localization process in a first embodiment, to estimate the tag position, that is, the position of the object to be tracked, in a reference frame described hereunder.

[Reference Frame Determination]

The reference frame may be determined by a reference frame determination process as follows for a case in which N anchors $(A_i)_{0 \leq i < N}$ are set up in the network 1. An orthonormal reference frame $(A_{I0}, \overrightarrow{m_1}, \overrightarrow{m_2}, \overrightarrow{m_3})$ may be determined based on anchor positions where the object localization process is to be performed. To solve this problem, amongst all of the anchors $(A_i)_{0 \leq i < N}$, it is assumed for the sake of convenience that a selection has been made to identify:

(a1) an anchor identifier $I_0$ of the anchor $A_{I0} = A_7$, satisfying $0 \leq I_0 < N$, associated to an origin of the reference frame;

(a2) an anchor identifier $I_1$ of the anchor $A_{I1} = A_5$, satisfying $0 \leq I_1 < N$, so that $\dfrac{\overrightarrow{A_{I_0}A_{I_1}}}{\left\|\overrightarrow{A_{I_0}A_{I_1}}\right\|} = \overrightarrow{m_1}$;

(a3) an anchor identifier $I_2$ of the anchor $A_{I2} = A_6$, satisfying $0 \leq I_2 < N$, so that $0 < \overrightarrow{A_{I0}A_{I2}}.\overrightarrow{m_2}$ and $\overrightarrow{A_{I0}A_{I2}}.\overrightarrow{m_3} = 0$; and

(a4) an anchor identifier $I_3$ of the anchor $A_{I3} = A_2$, satisfying $0 \leq I_3 < N$, so that $0 < \overrightarrow{A_{I0}A_{I3}}.\overrightarrow{m_3}$.

In other words, after the anchors $(A_i)_{0 \leq i < N}$ are set up in the network 1 within a space in which a tag T is movable, in a more or less controlled manner, the selection has been made to provide, amongst all of the anchors $(A_i)_{0 \leq i < N}$:

(b1) the anchor $A_{I0}$ to define the origin of the reference frame;
(b2) the anchor $A_{I1}$ to define a first axis of the reference frame;
(b3) the anchor $A_{I2}$ with a positive value along $\overrightarrow{m_2}$ to define a plane P of a reference elevation (for example, an elevation 0) as well as a direction of a second axis perpendicular to the first axis; and
(b4) the anchor $A_{I3}$ with a positive elevation to define a direction of a third axis perpendicular to the plane P of the first and second axes.

The selection may be made manually by a user, or may be made automatically by the CPU 23. In the latter case, the reference frame that is automatically determined may be less convenient or intuitive for the user when compared to that determined manually in the first case, depending on the situation.

Coordinates of the anchors $(A_i)_{0 \leq i < N}$ and the tag T in the reference frame can be denoted by $\left\{ \begin{matrix} x_i^1 \\ x_i^2 \\ x_i^3 \end{matrix} \right\}_{0 \leq i < N}$

and $\left\{ \begin{matrix} x_T^1 \\ x_T^2 \\ x_T^3 \end{matrix} \right\}$, respectively.

[Tag Localization]

The tag T inside the network 2 of the anchors $(A_i)_{0 \leq i < N}$ is localized by the tag localization process on the basis of its distance to each of the different anchors $(A_i)_{0 \leq i < N}$.
The distance of the tag T to each of the different anchors $(A_i)_{0 \leq i < N}$ may be estimated with a measurement error. This measurement error may be modeled as centered noise with an associated variance $\sigma^2$.
To estimate the 3D position of the tag T and thus the 3D position of the object to be tracked, it may be shown on one hand that

$$\overrightarrow{A_{I_0}A_i}.\overrightarrow{A_{I_0}T} = \frac{1}{2}\left(\left\|\overrightarrow{A_{I_0}A_i}\right\|^2 + \left\|\overrightarrow{A_{I_0}T}\right\|^2 - \left\|\overrightarrow{A_iT}\right\|^2\right)$$

and on the other hand that

$$\overrightarrow{A_{I_0}A_i}.\overrightarrow{A_{I_0}T} = \sum_{k=1}^3 x_i^k x_T^k,$$

where the anchor positions $\begin{Bmatrix} x_i^1 \\ x_i^2 \\ x_i^3 \end{Bmatrix}_{0 \le i < N}$ are known and the distances from the anchors $(A_i)_{0 \le i < N}$ to the tag T are measurable.

Consequently, the 3D position of the tag T may be estimated from a solution to the following matricial equation

$$A \begin{Bmatrix} x_T^1 \\ x_T^2 \\ x_T^3 \end{Bmatrix} = \widehat{G_T},$$

where:

(c1) $A$ is a (N - 1) $\times$ 3 matrix in which each line of the matrix indicates the 3D coordinates of one anchor of the set of anchors $(A_i)_{\substack{0 \le i < N \\ i \neq I_0}}$ (that is, all anchors except the anchor associated to the origin of the reference frame with the identifier $I_0$); and

(c2) $\widehat{G_T}$ is a column vector of dimension $(N - 1)$ composed of vertical concatenation of the associated estimation of $\frac{1}{2}(\left\|\overrightarrow{A_{I_0}A_i}\right\|^2 + \left\|\overrightarrow{A_{I_0}T}\right\|^2 - \left\|\overrightarrow{A_iT}\right\|^2)$ for $\begin{cases} 0 \le i < N \\ i \neq I_0 \end{cases}$ from the network 1 of the distance sensors 2.

It should be noted that if a distance $\left\|\overrightarrow{A_{I_0}A_i}\right\|$ is already known from the auto-calibration, Monte-Carlo iterations or the like may be performed to robustify the estimation to obtain the 3D position of the tag T.

It may be observed from the above equations that when the number of anchors becomes greater than or equal to four (4), which is preferable from the view point of increasing the accuracy of the object localization, the system of linear equations (or linear system) becomes over-determined.

In order to solve this over-determined system, a least squares estimation represented by the following matricial equation may be solved to estimate the 3D position of the tag T.

$$\begin{Bmatrix} \widehat{x_T^1} \\ x_T^2 \\ x_T^3 \end{Bmatrix} = (A^T A)^{-1} A^T \widehat{G_T}$$

However, under the assumption of a Gaussian measurement noise to estimate the distance between two distance sensors 2 of the network 1, one can show that a $(N - 1) \times (N - 1)$ covariance matrix $\Sigma$ of the measurement error associated to a scalar quantity of the column vector $\widehat{G_T}$ may be estimated by

$$cov\left(\widehat{G_T}^i, \widehat{G_T}^j\right) = \left\|\overrightarrow{A_{I_0}T}\right\|^2 \sigma^2 + \frac{3}{4}\sigma^4$$

and

$$\mathrm{var}\left(\widehat{G_T}^i\right) = (\|\overrightarrow{A_{I_0}T}\|^2 + \|\overrightarrow{A_iT}\|^2)\sigma^2 + \frac{3}{2}\sigma^4 \ .$$

Consequently, a more robust estimation of the 3D position of the tag T may be performed by making use of a weighted least squares estimation represented by the following matricial equation

$$\begin{Bmatrix} \widehat{x_T^1} \\ x_T^2 \\ x_T^3 \end{Bmatrix} = (A^T\Sigma^{-1}A)^{-1}\, A^T\Sigma^{-1}\widehat{G_T}.$$

FIG. 3 is a flow chart for explaining a process of the first embodiment. The process illustrated in FIG. 3 may be executed by the CPU 23 illustrated in FIG. 2. In step ST31 illustrated in FIG. 3, the CPU 23 performs the reference frame determination process described above. In step ST32, the CPU 23 performs the tag localization process described above, and the process ends. In step ST32, in the case where the object to be tracked may be a mobile phone or a tablet device having the display unit 26, the CPU 23 may display information on the estimated 3D position of the tag T on the display unit 26.

According to this embodiment, in a case in which the 3D position of the object to be tracked is estimated based on the distances from four (4) or more anchors using the system of linear equations (or linear system), it is possible to avoid the system of linear equations from becoming over-determined, and positively obtain a solution for the estimation of the 3D position of the object to be tracked. In addition, it is possible to improve the accuracy of the object localization compared to conventional methods, by employing the weighted least squares regression strategy in the calibrated network. Even in a case in which the distance sensors have a raw accuracy on the order of 10 cm to 15 cm, for example, the 3D position of the object to be tracked can be estimated with an accuracy on the order of 3 mm, for example, where the accuracy indicates a maximum amount of error from the actual 3D position of the object.

The object localization of this embodiment may be applied to various consumer and professional applications, including object (user, drone, mobile phone, etc.) positioning indoors or inside a stadium, for example, indoor object tracking with obstacles, or the like. In addition, the object localization of this embodiment may be designed to be compatible with various communication networks of distance sensors. Further, the object localization of this embodiment may be designed to be compatible with low SNRs (Signal-to-Noise Ratios) of the distance measurements.

Next, a description will be given of a second embodiment. In this embodiment, the network of distance sensors may be the same as the network 1 illustrated in FIG. 1 for the first embodiment.

In this embodiment, a framework can be provided to estimate the 3D position of different distance sensors in the network to optimize anchor positions for an optimal tracking of the object inside the network.

More particularly, this embodiment optimizes the anchor positions where the anchors are to be set up inside a user constrained environment, depending on the user environment and constraints, in order to accurately estimate the 3D position of the object to be tracked.

[Anchor Position Optimization]

A strategy is provided to optimize the initial positioning of the anchors by an anchor position optimization process in order to make the estimation of the 3D position of the tag T, that is, the 3D position of the object to be tracked, as robust as possible.

The positions of the anchors in the network 1 within the space in which the tag T is movable, has an influence on the estimation of the 3D position of the tag T. Hence, this embodiment optimizes the positions of the anchors, or the anchor positions.

By taking into consideration the matricial equation

$$\begin{Bmatrix} \widehat{x_T^1} \\ x_T^2 \\ x_T^3 \end{Bmatrix} = (A^T\Sigma^{-1}A)^{-1}\, A^T\Sigma^{-1}\widehat{G_T}$$

used in the first embodiment described above to estimate the 3D position of the tag T, it is possible to estimate a $3 \times 3$ covariance matrix $\Xi$ of the error of estimation which can be expressed by the following equation.

$$\Xi = (A^T \Sigma^{-1} A)^{-1}$$

In order to optimize the anchor positions, a variance of the error of estimation is minimized, where a mean value of the variance is proportional to *trace*($\Xi$) and depends on the anchor positions contained in the A matrix. However, $\Xi = \Xi(T)$ depends also on the 3D position of the tag T since $\Sigma = \Sigma(T)$.

When a 3D domain in which the tag T is to be subjected to the object localization is denoted by $\Omega$, a mean optimal location (or position) of the anchor can be defined in order to evaluate the 3D position of the tag T on the domain $\Omega$ as a solution to the following optimization problem

$$A^* = argmin(J(A))$$

subject to

$$\begin{cases} k(A) = 0 \\ l(A) > 0 \end{cases}$$

where

(d1) $A^*$ is a optimal matrix containing in its line the optimal locations of the anchors;
(d2) $J(A)$ is an objective function defined by

$$J(A) = trace(\int_\Omega (A^T \Sigma(T)^{-1} A)^{-1} dT);$$

and
(d3) k and l respectively are context-specific constraints of equalities and inequalities where the user is to incorporate the environmental constraints of the user's anchor positioning, including fixed anchors, anchors on a specific surface or border, or the like.

This optimization problem is difficult to solve when a large number of local minima are included, because the integral term may not be easily tractable. Given a specific initial location (or position) provided by the user, an optimization algorithm such as IPO (Interior Point Optimizer) already introduced before may be used to find the optimal solution close to this initial positioning. The integral term may be estimated by Monte-Carlo-based strategies, for example.

When the user does not provide the initial positioning of the anchors, a metaheuristic of the optimization, including evolutionary algorithms, for example, may be used to find a first raw good candidate which is then provided to a classical optimization algorithm.

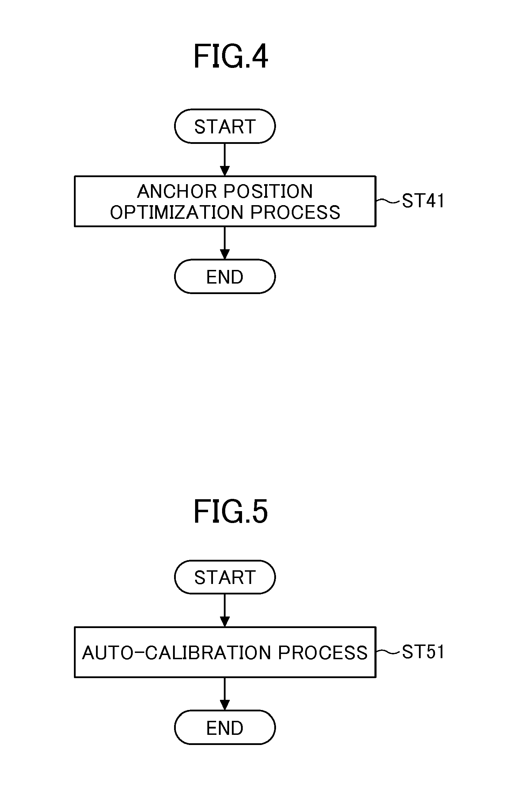

FIG. 4 is a flow chart for explaining a process of the second embodiment. The process illustrated in FIG. 4 may be executed by the CPU 23 illustrated in FIG. 2. In step ST41 illustrated in FIG. 4, the CPU 23 performs the anchor position optimization process described above, and the process ends. In step ST41, in the case where the object to be tracked may be a mobile phone or a tablet device having the display unit 26, the CPU 23 may display information on the optimized anchor positions on the display unit 26 in order to urge the operator or the user to set up the anchors at the optimized anchor positions, preferably before the process of the first embodiment illustrated in FIG. 3 is started.

According to this embodiment, it is possible to further improve the accuracy of the object localization by the optimized anchor positions, in addition to obtaining the advantageous features of the first embodiment described above. Of course, this embodiment may be suitably combined with the first embodiment described above.

Next, a description will be given of a third embodiment. In this embodiment, the network of distance sensors may be the same as the network 1 illustrated in FIG. 1 for the first embodiment.

In this embodiment, a framework can be provided to estimate the 3D position of the different distance sensors in the network by avoiding manual calibration and thus introducing auto-calibration.

More particularly, this embodiment performs a user-adaptive auto-calibration on the network 1 of distance sensors 2, including a geometric-based initialization, and an optimization-strategy to affine and robustify initial values of the calibration.

In this embodiment, the reference frame is automatically built from a set of anchors and user settings, as well as a constrained-optimization based method to automatically determine the 3D coordinates of the anchors in the reference frame, to perform the so-called auto-calibration.

[Auto-Calibration]

The reference frame may be user-defined, in a manner similar to that of the first embodiment described above.

As in the case of the first embodiment described above, the 3D coordinates of the anchors $(A_i)_{0 \leq i < N}$ and the tag T in the reference frame can be denoted by $\begin{Bmatrix} x_i^1 \\ x_i^2 \\ x_i^3 \end{Bmatrix}_{0 \leq i < N}$ and $\begin{Bmatrix} x_T^1 \\ x_T^2 \\ x_T^3 \end{Bmatrix}$, respectively. In this embodiment, an auto-calibration process automatically estimates 3D coordinates $\begin{Bmatrix} x_i^1 \\ x_i^2 \\ x_i^3 \end{Bmatrix}_{0 \leq i < N}$ of the anchors in the reference frame. The approach used to estimate the 3D coordinates $\begin{Bmatrix} x_i^1 \\ x_i^2 \\ x_i^3 \end{Bmatrix}_{0 \leq i < N}$ of the anchors in the reference frame does not require any active interaction with the user and relies only on the good estimation of a matrix $G = (G_{ij})_{0 \leq {i \atop j} < N}$ of scalar

products called a Gram matrix. Each component of this Gram matrix is a scalar product defined by

$$G_{ij} = \overrightarrow{A_{I_0} A_i} . \overrightarrow{A_{I_0} A_j} \, ,$$

and it may be easily shown that

$$G_{ij} = \overrightarrow{A_{I_0} A_i} . \overrightarrow{A_{I_0} A_j} = \frac{1}{2} \left( \left\| \overrightarrow{A_{I_0} A_i} \right\|^2 + \left\| \overrightarrow{A_{I_0} A_j} \right\|^2 - \left\| \overrightarrow{A_i A_j} \right\|^2 \right).$$

Such a scalar quantity of the Gram matrix may thus be estimated from $\hat{G} = (\hat{G}_{ij})_{0 \leq i < N}$ by the distance sensors 2, because the distance between the anchors is known.

On the other hand, given the notation introduced before, each component of the Gram matrix can be represented by

$$G_{ij} = \overrightarrow{A_{I_0} A_i} . \overrightarrow{A_{I_0} A_j} = \sum_{k=1}^{3} x_i^k x_j^k.$$

The auto-calibration process of this embodiment is thus a constrained optimization in which the 3D coordinates of the anchors $(A_i)_{0 \leq i < N}$ in the reference frame are estimated so that the associated, estimated Gram matrix fits the Gram matrix measured from the distance sensors.

[Constrained Optimization Formulation]

The constrained optimization performed by the auto-calibration process may be formulated by

$$X^* = argmin\ \mathrm{F}(X)$$

subject to

$$\begin{cases} g(X) = 0 \\ h(X) > 0 \end{cases}$$

where:

(e1) $X$ is a column vector of dimension $3 \times N$ composed of vertical concatenation of the 3D coordinates $\begin{Bmatrix} x_i^1 \\ x_i^2 \\ x_i^3 \end{Bmatrix}_{0 \leq i < N}$ of the anchors in the reference frame;

(e2) $X^*$ is a column vector of dimension $3 \times N$ composed of vertical concatenation of optimal values of the 3D coordinates $\begin{Bmatrix} x_i^1 \\ x_i^2 \\ x_i^3 \end{Bmatrix}_{0 \leq i < N}$ of the anchors;

(e3) F is a scalar objective function defined by

$$\mathrm{F}(X) = \sum_{i=0}^{N-1} \sum_{j=0}^{j \leq i} \left[ \left( \sum_{k=1}^{3} x_i^k x_j^k \right) - \hat{G}_{ij} \right]^2$$

which computes an L2-Norm of a difference between the estimated and the measured scalar products of the Gram matrix and takes into account a symmetry of the problem;

(e4) g is an equality constraint defined by $g(X) = \begin{bmatrix} x_{I_0}^1 \\ x_{I_0}^2 \\ x_{I_0}^3 \\ x_{I_1}^2 \\ x_{I_1}^3 \\ x_{I_2}^3 \end{bmatrix}$ which implements the

equalities implied by the selection described in the first embodiment associated with the user-defined reference frame; and

(e5) h is an inequality constraint defined by $h(X) = \begin{bmatrix} x_{I_1}^1 \\ x_{I_2}^2 \\ x_{I_3}^3 \end{bmatrix}$ which implements the

inequalities implied by the selection described in the first embodiment associated with the user-defined reference frame.

Because G is only a noisy measurement of the Gram matrix, the above defined cost function can make use of all the distance information at the same time to robustify a final estimation of the anchors. Moreover, since the auto-calibration process does not suppose strong duration constraints, Monte-Carlo iterations can also be performed to more accurately estimate $\hat{G}_{ij}$ and obtain better final results.

Gradient or Jacobian matrices as well as Hessian matrices of F, g, and h are analytically tractable and may be given to any constraint optimization algorithm such as the IPO (Interior Point Optimizer), for example. However, any suitable numeric approximation of these quantities may also be used to compute the optimal selection, such as finite difference approximation for the gradient or Jacobian matrices, or BFGS (Broyden-Fletcher-Goldfarb-Shanno) approximation for the Hessian matrices, for example.

To find the optimal solution, a good initial value is preferably provided to the optimization algorithm. Such a good initial value may be difficult to provide, however, this embodiment employs a quite straightforward geometric approach.

[Geometric Initialization]

To estimate an initial solution for the 3D position of the anchors, a progressive strategy based on the selection described in the first embodiment associated with the user-defined reference frame is employed, where each component of the anchors is estimated iteratively, starting from the first one (along $\overrightarrow{m_1}$) to the last one (along $\overrightarrow{m_3}$).

First, the estimation of $\left(x_i^1\right)_{0 \leq i < N}$ is performed. In this case, an estimation of such a component may be obtained from

$$x_i^1 = \overrightarrow{A_{I_0}A_\iota}.\overrightarrow{m_1} = \overrightarrow{A_{I_0}A_\iota}.\frac{\overrightarrow{A_{I_0}A_{I_1}}}{\|\overrightarrow{A_{I_0}A_{I_1}}\|} \simeq \frac{\hat{G}_{I_1 i}}{\sqrt{\hat{G}_{I_1 I_1}}},$$

that is, from

$${}^0x_i^1 = \frac{\hat{G}_{I_1 i}}{\sqrt{\hat{G}_{I_1 I_1}}}.$$

Second, the second components $\left(x_i^2\right)_{0 \leq i < N}$ are considered. Given the assumptions made on $A_{I_2}$ in the user-defined reference frame, it may be similarly shown that

$$x_{I_2}^2 = \sqrt{\|\overrightarrow{A_{I_0}A_{I_2}}\|^2 - x_{I_2}^{1\,2}} \simeq \sqrt{\hat{G}_{I_1 I_2} - {}^0x_{I_2}^{1\,2}} = {}^0x_{I_2}^2.$$

Then, the following equation

$$\overrightarrow{m_2} = \frac{\overrightarrow{A_{I_0}A_{I_2}}}{x_{I_2}^2} - \frac{x_{I_2}^1}{x_{I_2}^2}\overrightarrow{m_1}$$

stands, and consequently, $\forall i \neq I_2$,

$$x_i^2 = \overrightarrow{A_{I_0}A_\iota}.\overrightarrow{m_2} = \overrightarrow{A_{I_0}A_\iota}.\frac{\overrightarrow{A_{I_0}A_{I_2}}}{x_{I_2}^2} - \frac{x_{I_2}^1}{x_{I_2}^2}\overrightarrow{A_{I_0}A_\iota}.\overrightarrow{m_1} \simeq \frac{\hat{G}_{I_2 i}}{^0x_{I_2}^2} - \frac{\hat{G}_{I_1 I_2}}{^0x_{I_2}^2\sqrt{\hat{G}_{I_1 I_1}}}\frac{\hat{G}_{I_1 i}}{\sqrt{\hat{G}_{I_1 I_1}}}$$

$$= \frac{\hat{G}_{I_1 I_1}\hat{G}_{I_2 i} - \hat{G}_{I_1 I_2}\hat{G}_{I_1 i}}{\hat{G}_{I_1 I_1}\,^0x_{I_2}^2}$$

that is, $^0x_{I_2}^2 = \sqrt{\hat{G}_{I_1 I_2} - ^0x_{I_2}^{1\,2}}$ and $\forall i \neq I_2$, $^0x_i^2 = \frac{\hat{G}_{I_1 I_1}\hat{G}_{I_2 i} - \hat{G}_{I_1 I_2}\hat{G}_{I_1 i}}{\hat{G}_{I_1 I_1}\,^0x_{I_2}^2}$ stand.

Third, the third components $(x_i^3)_{0 \leq i < N}$ are considered. Because the first and second components become known from the above, the following equation

$$x_i^3 = \pm\sqrt{\left\|\overrightarrow{A_{I_0}A_\iota}\right\|^2 - (x_i^{1\,2} + x_i^{2\,2})} \simeq \pm\sqrt{\hat{G}_{ii} - (^0x_i^{1\,2} + ^0x_i^{2\,2})}$$

can be obtained, where the sign of the latter, second quantity may be obtained by analyzing the sign of the following scalar product

$$\left[\overrightarrow{A_{I_0}A_\iota} - (x_i^1\overrightarrow{m_1} + x_i^2\overrightarrow{m_2})\right].\overrightarrow{A_{I_0}A_{I_3}} = \overrightarrow{A_{I_0}A_\iota}.\overrightarrow{A_{I_0}A_{I_3}} - (x_i^1 x_{I_3}^1 + x_i^2 x_{I_3}^2)$$
$$\simeq \hat{G}_{I_3 i} - (^0x_i^1\,^0x_{I_3}^1 + ^0x_i^2\,^0x_{I_3}^2)$$

that is,

$$^0x_i^3 = Sign(\hat{G}_{I_3 i} - (^0x_i^1\,^0x_{I_3}^1 + ^0x_i^2\,^0x_{I_3}^2))\sqrt{\hat{G}_{ii} - (^0x_i^{1\,2} + ^0x_i^{2\,2})}.$$

An initialization vector $X^0$, that is, the column vector of dimension $3 \times N$ composed of the vertical concatenation of the initial values $\left\{\begin{array}{c} ^0x_i^1 \\ ^0x_i^2 \\ ^0x_i^3 \end{array}\right\}_{0 \leq i < N}$ , is thus provided to the optimization algorithm. These initial values are sensitive to the noise on the measurement of the distances, however, these initial values are good initial candidates for the anchor position optimization.

FIG. 5 is a flow chart for explaining a process of the third embodiment. The process illustrated in FIG. 5 may be executed by the CPU 23 illustrated in FIG. 2. In step ST51 illustrated in FIG. 5, the CPU 23 performs the auto-calibration process described above, and the process ends. In step ST51, the CPU 23 may transmit via the transmitter 21, information on the 3D coordinates of the anchors in the reference frame, obtained by the auto-calibration, to the anchor or the tag T that performs the process of the first embodiment illustrated in FIG. 3. In a case in which the tag localization process of step ST32 illustrated in FIG. 3 and the auto-calibration process of step ST51 are performed by the same distance sensor 2, for example, the CPU 23 of this distance sensor 2 may obtain the information on the 3D coordinates of the anchors in the reference frame, obtained by the auto-calibration, when performing the tag localization.

According to this embodiment, it is possible to further improve the accuracy of the object localization by the completely passive auto-calibration process, in addition to obtaining the advantageous features of the first embodiment described above. Of course, this embodiment may be suitably combined with the first embodiment described above, or with both the first and second embodiments described above.

In each of the embodiments described above, the 3D object localization may be performed by the distance sensor forming the tag. However, a part of the 3D object localization may be performed by the distance sensor forming at least one of the anchors, in order to suitably distribute a load of the 3D object localization amongst the distance sensors forming the tag and the anchors. In addition, a part of the 3D object localization may be performed by the distance sensor forming one of the anchors acting as a representative anchor. When a part of the 3D object location is performed by the distance sensor forming the anchor, the anchor may measure the distance from the tag and transmit the measured distance to the tag, for example. In addition, the representative anchor may measure the distance from the tag, receive from other anchors the respective measured distances from the tag, and transmit the distance measured by the representative anchor and the distances measured by the other anchors to the tag for use in estimating the 3D position of the tag. Further, the representative anchor may determine a suitable coordinate system of a closed internal space in which the tag is movable. Accordingly, the object localization may be performed by the processor of the tag, or by a processor including a processor of the distance sensor forming at least one of the anchors and a processor of the distance sensor forming the tag.

Further, the functions of the representative anchor described above, for example, may be performed by a center apparatus that is communicable with the anchors and the tags. Preferably, the center apparatus performs at least a part of the 3D object localization that may put a relatively large load on the anchors and/or the tags.

Although the embodiments are numbered with, for example, "first" "second" or "third", the ordinal numbers do not imply priorities of the embodiments. Many other variations and modifications will be apparent to those skilled in the art.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present invention have been described in detail, it should be understood that the various changes, substitutions, and alterations could be made hereto without departing from the scope of the invention.

## Claims

1. A method for optimizing positions of anchors ($A_0$-$A_9$) in a reference frame of a network (1), wherein the network (1) includes distance sensors forming the anchors ($A_0$-$A_9$) that are fixed in respective positions and a distance sensor forming a tag (T) associated with an object of which three-dimensional position in the reference frame of the network (1) is estimated, the method comprising:

   optimizing (ST41) positions of the anchors ($A_0$-$A_9$) in the network (1) by minimizing a variance of an error of estimation of the positions of the anchors ($A_0$-$A_9$).

2. The method as claimed in claim 1, wherein the optimizing takes into consideration a matricial equation

$$\begin{Bmatrix} \widehat{x_T^1} \\ x_T^2 \\ x_T^3 \end{Bmatrix} = (A^T \Sigma^{-1} A)^{-1} A^T \Sigma^{-1} \widehat{G_T}$$

   to estimate the 3D position of the tag (T) in the reference frame of the network (1) using a weighted least squares estimation, in order to estimate a $3 \times 3$ covariance matrix $\Xi$ of an error of estimation expressed by

$$\Xi = (A^T \Sigma^{-1} A)^{-1},$$

   where coordinates of the anchors $(A_i)_{0 \le i < N}$ and the tag (T) in the reference frame are denoted by

$$\begin{pmatrix} x_i^1 \\ x_i^2 \\ x_i^3 \end{pmatrix}_{0 \le i < N} \text{and} \begin{pmatrix} x_T^1 \\ x_T^2 \\ x_T^3 \end{pmatrix}, \text{ respectively,}$$

A is a ($N$ - 1) $\times$ 3 matrix in which each line of the matrix indicates three-dimensional coordinates of one anchor of the set of anchors $(A_i)_{\substack{0 \le i < N, \\ i \ne I_0}}$

$\widehat{G_T}$ is a column vector of dimension ($N$ - 1) composed of vertical concatenation of associated estimation of

$$\frac{1}{2}(\|\overrightarrow{A_{I_0}A_i}\|^2 + \|\overrightarrow{A_{I_0}T}\|^2 - \|\overrightarrow{A_iT}\|^2) \text{ for } \begin{cases} 0 \le i < N \\ i \ne I_0 \end{cases} \text{ from the network (1), and}$$

$\Sigma$ is a ($N$ - 1) $\times$ ($N$ - 1) covariance matrix of a measurement error associated to a scalar quantity of the column vector $\widehat{G_T}$.

3. The method as claimed in claim 2, wherein
   the optimizing optimizes the anchor positions by minimizing a variance of an error of the estimation, where a mean value of the variance is proportional to *trace*($\Xi$) and depends on the anchor positions contained in the **A** matrix, and $\Xi = \Xi(T)$ depends also on the 3D position of the tag (T);
   a 3D domain in which the tag (T) is to be subjected to the object localization is denoted by $\Omega$;
   a mean optimal position of the anchor is defined in order to evaluate the 3D position of the tag (T) on the domain $\Omega$ as a solution to an optimization problem

$$A^* = argmin(J(A))$$

subject to

$$\begin{cases} k(A) = 0 \\ l(A) > 0 \end{cases};$$

where
(d1) **A***is an optimal matrix containing in its line the optimal positions of the anchors; (d2) *J*(**A**) is an objective function defined by

$$J(A) = trace(\int_\Omega (A^T \Sigma(T)^{-1} A)^{-1} dT);$$

and
(d3) k and l respectively are context-specific constraints of equalities and inequalities where environmental constraints of anchor positioning are incorporated.

4. An apparatus (2) for optimizing positions of anchors ($A_0$-$A_9$) in a reference frame of a network (1), wherein the network (1) includes distance sensors forming the anchors ($A_0$-$A_9$) that are fixed in respective positions and a distance sensor forming a tag (T) associated with an object of which three-dimensional position in the reference frame of the network (1) is estimated, the apparatus comprising:

   a processor (23) configured to optimize positions of the anchors ($A_0$-$A_9$) in the network (1) by minimizing a variance of an error of estimation of the positions of the anchors ($A_0$-$A_9$).

5. The apparatus as claimed in claim 4, wherein the processor (23) takes into consideration a matricial equation

$$\begin{cases} \widehat{x_T^1} \\ x_T^2 \\ x_T^3 \end{cases} = (A^T \Sigma^{-1} A)^{-1} A^T \Sigma^{-1} \widehat{G_T}$$

to estimate the 3D position of the tag (T) in the reference frame of the network (1) using a weighted least squares estimation, in order to estimate a $3 \times 3$ covariance matrix $\Xi$ of an error of estimation expressed by

$$\Xi = (A^T \Sigma^{-1} A)^{-1},$$

where coordinates of the anchors $(A_i)_{0 \leq i < N}$ and the tag (T) in the reference frame are denoted by $\begin{cases} x_i^1 \\ x_i^2 \\ x_i^3 \end{cases}_{0 \leq i < N}$

and $\begin{cases} x_T^1 \\ x_T^2 \\ x_T^3 \end{cases}$, respectively,

$A$ is a $(N - 1) \times 3$ matrix in which each line of the matrix indicates three-dimensional coordinates of one anchor of the set of anchors $\begin{matrix}(A_i)_{0 \leq i < N}, \\ i \neq I_0\end{matrix}$ $\widehat{G_T}$ is a column vector of dimension $(N - 1)$ composed of vertical concatenation of associated estimation of $\frac{1}{2}(\left\|\overrightarrow{A_{I_0}A_i}\right\|^2 + \left\|\overrightarrow{A_{I_0}T}\right\|^2 - \left\|\overrightarrow{A_iT}\right\|^2)$ for $\begin{cases} 0 \leq i < N \\ i \neq I_0 \end{cases}$ from the network (1),

and

$\Sigma$ is a $(N - 1) \times (N - 1)$ covariance matrix of a measurement error associated to a scalar quantity of the column

vector $\widehat{G_T}$.

6. The apparatus as claimed in claim 5, wherein the processor (23) optimizes the anchor positions by minimizing a variance of an error of the estimation, where a mean value of the variance is proportional to *trace*($\Xi$) and depends on the anchor positions contained in the *A* matrix, and $\Xi = \Xi(T)$ depends also on the 3D position of the tag (T); a 3D domain in which the tag (T) is to be subjected to the object localization is denoted by $\Omega$; a mean optimal position of the anchor is defined in order to evaluate the 3D position of the tag (T) on the domain $\Omega$ as a solution to an optimization problem

$$A^* = argmin(J(A))$$

subject to

$$\begin{cases} k(A) = 0 \\ l(A) > 0 \end{cases};$$

where

(d1) $A^*$ is an optimal matrix containing in its line the optimal positions of the anchors;
(d2) $J(A)$ is an objective function defined by

$$J(A) = trace(\int_\Omega (A^T\Sigma(\mathrm{T})^{-1}A)^{-1}dT);$$

and
(d3) k and I respectively are context-specific constraints of equalities and inequalities where environmental constraints of anchor positioning are incorporated.

7. A computer-readable storage medium (24) having stored therein a program which, when executed by a computer (23), causes the computer to perform a process for optimizing positions of anchors ($A_0$-$A_9$) in a reference frame of a network (1), wherein the network (1) includes distance sensors forming the anchors ($A_0$-$A_9$) that are fixed in respective positions and a distance sensor forming a tag (T) associated with an object of which three-dimensional position in the reference frame of the network (1) is estimated, the process including optimizing positions of the anchors ($A_0$-$A_9$) in the network (1) by minimizing a variance of an error of estimation of the positions of the anchors ($A_0$-$A_9$).

8. The computer-readable storage medium as claimed in claim 7, wherein the optimizing takes into consideration a matricial equation

$$\begin{Bmatrix} \widehat{x_T^1} \\ x_T^2 \\ x_T^3 \end{Bmatrix} = (A^T\Sigma^{-1}A)^{-1}\, A^T\Sigma^{-1}\widehat{G_T}$$

to estimate the 3D position of the tag (T) in the reference frame of the network (1) using a weighted least squares estimation, in order to estimate a $3 \times 3$ covariance matrix $\Xi$ of an error of estimation expressed by

$$\Xi = (A^T\Sigma^{-1}A)^{-1},$$

where coordinates of the anchors $(A_i)_{0 \le i < N}$ and the tag (T) in the reference frame are denoted by

$$\begin{Bmatrix} x_i^1 \\ x_i^2 \\ x_i^3 \end{Bmatrix}_{0 \le i < N} \text{ and } \begin{Bmatrix} x_T^1 \\ x_T^2 \\ x_T^3 \end{Bmatrix}, \text{ respectively,}$$

A is a $(N - 1) \times 3$ matrix in which each line of the matrix indicates three-dimensional coordinates of one anchor of the set of anchors $(A_i)_{\substack{0 \le i < N, \\ i \ne I_0}}$

$\widehat{G_T}$ is a column vector of dimension ($N$ - 1) composed of vertical concatenation of associated estimation of

$\frac{1}{2}(\|\overrightarrow{A_{I_0}A_i}\|^2 + \|\overrightarrow{A_{I_0}T}\|^2 - \|\overrightarrow{A_iT}\|^2)$ for $\begin{cases} 0 \le i < N \\ i \ne I_0 \end{cases}$ from the network (1), and

$\Sigma$ is a $(N - 1) \times (N - 1)$ covariance matrix of a measurement error associated to a scalar quantity of the column

vector $\widehat{G_T}$.

9. The computer-readable storage medium as claimed in claim 8, wherein
the optimizing optimizes the anchor positions by minimizing a variance of an error of the estimation, where a mean value of the variance is proportional to *trace*($\Xi$) and depends on the anchor positions contained in the **A** matrix, and $\Xi = \Xi(T)$ depends also on the 3D position of the tag (T);
a 3D domain in which the tag (T) is to be subjected to the object localization is denoted by $\Omega$;
a mean optimal position of the anchor is defined in order to evaluate the 3D position of the tag (T) on the domain $\Omega$ as a solution to an optimization problem

$$A^* = argmin(J(\boldsymbol{A}))$$

subject to

$$\begin{cases} k(\boldsymbol{A}) = 0 \\ l(\boldsymbol{A}) > 0 \end{cases};$$

where

(d1) $\boldsymbol{A}^*$ is an optimal matrix containing in its line the optimal positions of the anchors;
(d2) $J(\boldsymbol{A})$ is an objective function defined by

$$J(\boldsymbol{A}) = trace(\int_{\Omega} (\boldsymbol{A}^T \boldsymbol{\Sigma}(\mathrm{T})^{-1} \boldsymbol{A})^{-1} \boldsymbol{d}T);$$

and
(d3) k and I respectively are context-specific constraints of equalities and inequalities where environmental constraints of anchor positioning are incorporated.

10. A computer program product downloadable from a communication network and/or recorded on a medium readable by computer and/or executable by a processor, comprising program code instructions for implementing the steps of a method according to at least one of claims 1 to 3.

# FIG.1

# FIG.2

2

```
┌──────────────┐   ┌──────────────┐   ┌──────────────┐
│     21       │   │     23       │   │     25       │
│ TRANSMITTER  │   │     CPU      │   │  KEYBOARD    │
└──────┬───────┘   └──────┬───────┘   └──────┬───────┘
       │                  │                  │        27
───────┼──────────────────┼──────────────────┼──────────
       │                  │                  │
┌──────┴───────┐   ┌──────┴───────┐   ┌──────┴───────┐
│   RECEIVER   │   │   STORAGE    │   │   DISPLAY    │
│              │   │    UNIT      │   │    UNIT      │
└──────────────┘   └──────────────┘   └──────────────┘
         22                 24                 26
```

# FIG.3

START

↓

REFERENCE FRAME DETERMINATION PROCESS — ST31

↓

TAG LOCALIZATION PROCESS — ST32

↓

END

# FIG.4

START

ANCHOR POSITION
OPTIMIZATION PROCESS — ST41

END

# FIG.5

START

AUTO-CALIBRATION PROCESS — ST51

END

Europäisches
Patentamt

European
Patent Office

Office européen
des brevets

# EUROPEAN SEARCH REPORT

Application Number

EP 14 30 6503

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/074569 A1 (ALSINDI NAYEF [BH] ET AL) 31 March 2011 (2011-03-31) | 1,2,4,5, 7,8,10 | INV. G01S5/00 |
| A | * figures 1,3 *<br>* paragraph [0019] *<br>* paragraph [0023] *<br>* paragraph [0034] *<br>* paragraph [0044] - paragraph [0051] * | 3,6,9 | G01S5/02 |
| | ----- | | |
| X | US 2007/150176 A1 (ZHANG YING [US] ET AL) 28 June 2007 (2007-06-28) | 1,2,4,5, 7,8,10 | |
| A | * figure 1 *<br>* paragraph [0020] *<br>* paragraph [0024] - paragraph [0025] *<br>* paragraph [0029] - paragraph [0043] * | 3,6,9 | |
| | ----- | | |
| X | LEUNE TILMAN ET AL: "Optimization of wireless locating in complex environments by placement of anchor nodes with evolutionary algorithms", 2013 IEEE 18TH CONFERENCE ON EMERGING TECHNOLOGIES & FACTORY AUTOMATION (ETFA), IEEE, 10 September 2013 (2013-09-10), pages 1-6, XP032517067, ISSN: 1946-0740, DOI: 10.1109/ETFA.2013.6648068 [retrieved on 2013-10-24] | 1,4,7,10 | |
| A | * sections 2.2 and 3.2-3.5 * | 2,3,5,6, 8,9 | TECHNICAL FIELDS SEARCHED (IPC) G01S |
| | ----- | | |

The present search report has been drawn up for all claims

| Place of search | Date of completion of the search | Examiner |
|---|---|---|
| Munich | 25 February 2015 | Hekmat, Taymoor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**EP 3 001 214 A1**

## ANNEX TO THE EUROPEAN SEARCH REPORT
## ON EUROPEAN PATENT APPLICATION NO.

EP 14 30 6503

This annex lists the patent family members relating to the patent documents cited in the above-mentioned European search report.
The members are as contained in the European Patent Office EDP file on
The European Patent Office is in no way liable for these particulars which are merely given for the purpose of information.

25-02-2015

| Patent document cited in search report | Publication date | Patent family member(s) | Publication date |
|---|---|---|---|
| US 2011074569 A1 | 31-03-2011 | US 2011074569 A1<br>WO 2011040346 A1 | 31-03-2011<br>07-04-2011 |
| US 2007150176 A1 | 28-06-2007 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JORGE GUEVARA et al.** Auto-localization algorithm for local positioning systems. *Ad Hoc Networks,* 2012, vol. 10, 1090-1100
- **RAINER MAUTZ et al.** A Robust Indoor Positioning and Auto-Localisation Algorithm. *Journal of Global Positioning Systems,* 2012, vol. 6 (1), 38-46
- **PRIYADHARSINI et al.** Survey on Auto-Calibration of Beacon Nodes in Indoor Location Computing. *International Journal of Emerging Technology and Advanced Engineering,* 2012, vol. 2 (11), 170-175